## Europäisches Patentamt

## European Patent Office

## Office européen des brevets

(11) Publication number: **0 109 371**
**B1**

# EUROPEAN PATENT SPECIFICATION

(45) Date of publication of patent specification: **04.03.87**

(21) Application number: **83850288.8**

(22) Date of filing: **28.10.83**

(51) Int. Cl.⁴: **F 16 D 3/46,** F 16 D 3/16

(54) Universal joint.

(30) Priority: **05.11.82 SE 8206290**

(43) Date of publication of application:
**23.05.84 Bulletin 84/21**

(45) Publication of the grant of the patent:
**04.03.87 Bulletin 87/10**

(84) Designated Contracting States:
**AT BE CH DE FR GB IT LI NL**

(56) References cited:
**DE-C- 569 889**
**DE-C- 875 596**
**DE-C- 914 208**
**FR-A- 344 774**
**FR-A- 471 842**
**GB-A- 131 789**
**GB-A- 946 937**
**GB-A- 960 313**
**US-A-2 057 736**

(73) Proprietor: **Affärsverket FFV**
**Tullgatan 8**
**S-631 87 Eskilstuna (SE)**

(72) Inventor: **Andersson, Henry**
**Blahammarvägen 12**
**S-132 00 Saltsjö Boo (SE)**

(74) Representative: **Avellan-Hultman, Olle**
**Avellan-Hultman Patentbyra AB P.O. Box 5366**
**S-102 46 Stockholm 5 (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a universal joint comprising two joint coupling claws adapted to transmit rotary torque, at a universal angle position, between the two coupling claws, in which each one of the two coupling claws is formed with a fork like claw arm, which claws are rotatable axially in relation to each other over an intermediate coupling means comprising at least four mutually cooperating insert parts, and in which the coupling claw arms are arc formed and angle formed with the apex of the angle sides thereof facing radially inwards, and in which said claw arms extend over an angle of more than 90° and cooperate with four insert parts provided between each respective pair of coupling claw arms (DE—C—569889).

Many universal joints are of cardan type and comprise two fork like coupling parts which over cross pins are connected to each other, and in which the said cross pins are mounted in each other over slide bearings or roller bearings. The said previously known universal joints often are expensive to manufacture, and after some time of use the bearings or the pins are worn, whereby plays appear in the joints.

Many universal joints are made completely of metal and give a butt metallic transmission of torque. In many cases such butt metallic contact may be advantageous, but in other cases there is a wish for a softer and more dampened contact.

For some specific purposes it is also a wish that the universal joint is formed so that the joint is broken up or collapses when the angle between the two joint shafts exceed a predetermined angle. One example of such field of use is for a wheel steering tube assembly for motor cars in which it is wanted that the joint folds and is broken up in case of a car crash.

A main object of the invention has been to provide a universal joint of the above mentioned type which is simple and cheap to manufacture and which is broken up or brought to collapse when subjected to an angle exceeding a predetermined angle and in case of overload. Such a universal joint is known from the DE—C—875596 or the GB—A—946937 in which the universal joint comprises two fork like coupling parts which are inter-connected over an intermediate ball like coupling means having two grooves in which the fork like coupling parts engage. A universal joint of this type can be simple and easy to manufacture, and if the intermediate ball like coupling means is made of some resilient material it may also give a non-metallic soft force transmittance between the two interconnected shafts for machine parts.

A coupling of the above mentioned general type is known from the DE—C—569889 which discloses a coupling having two fork like coupling claw arms cooperating with each other over four conical insert parts which are biassed by a spring into contact with the sides of the two coupling claw arms.

Said known coupling is disadvantageous both in that the insert part can not in practice be forced so strongly into contact with the coupling claw arms as to prevent the insert parts from being displaced when the coupling is subjected to a rotary torque, and in that the coupling is not self-centering since one or more of the insert parts, when the coupling is subjected to rotary torque, can be forced a longer distance out of engagement with the sides of the coupling claw arms than the other insert part or parts whereby the two coupling claw arms get out of ordinary coaxial engagement with each other.

According to the invention the insert parts of the coupling are formed with a foot part having at least one radially inwards directed wedge coupling surface cooperating with a spring biassed wedge joint means slidingly being in contact with the wedge coupling surface of the insert parts thereby biassing the insert parts apart and into contact with angle sides of the coupling claw arms so as to automatically eliminate any play appearing in the joint depending on wear, and whereby all four insert parts are acted on by one and the same wedge coupling means.

Normally each fork or claw is formed with two cooperating arms, and the two forks or claws are interconnected rotated 90° axially in relation to each other, whereby the coupling is fully symmetrical about the longitudinal axis. It is, however, possible to design the forks or claws with more than two arms, for instance 3—3, 4—4 etc. For the sake of simplicity the invention will, however, be described only with reference to two-armed forks or claws according to a non-limiting embodiment of the inventional idea.

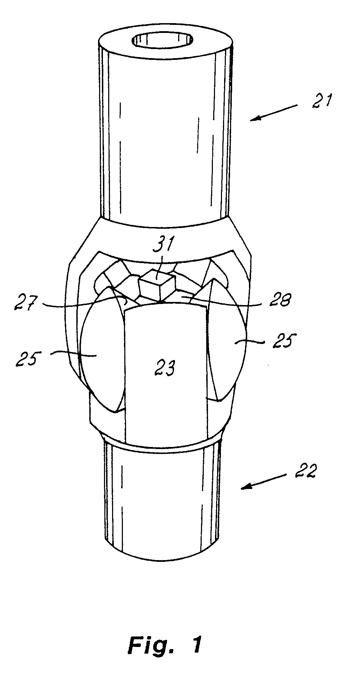

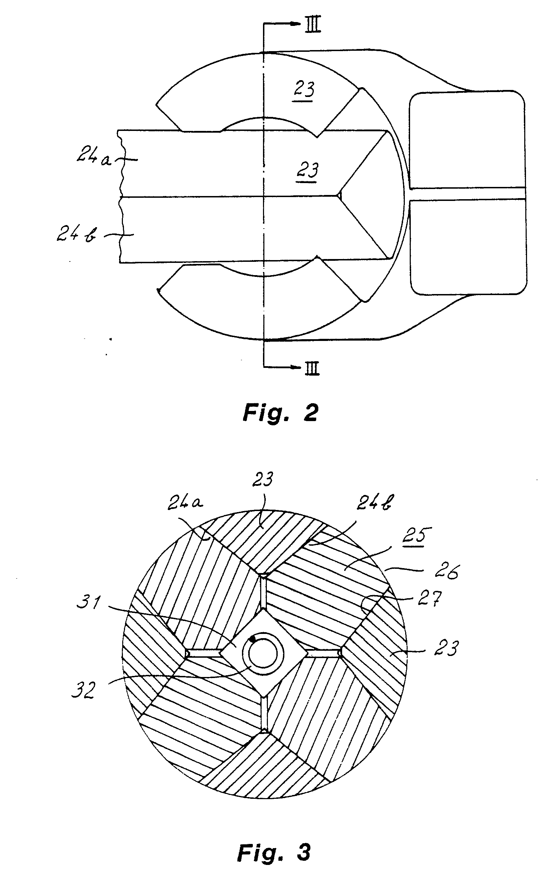

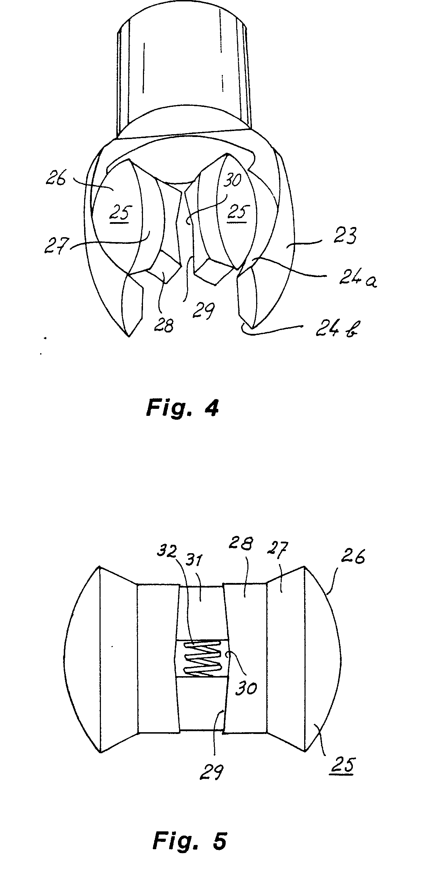

Further characteristics of the invention will be evident from the following detailed specification in which reference will be made to the accompanying drawings. In the drawings figure 1 is a perspective view of a universal joint according to the invention. Figure 2 is a partly diagrammatical and broken up view of the coupling claws of the joint according to figure 1. Figure 3 is a cross section along line III—III of figure 2. Figure 4 is a perspective diagrammatical view of a coupling claw together with two intermediate coupling insert parts in a joint according to figures 1—3, and figure 5 diagrammatically illustrates the automatically obtained play-free adjustment means of the joint according to figures 1—4.

The universal joint shown in figures 1—5 generally comprises two coupling claws 21 and 22 each intended to be connected to a shaft or a machine part, and an intermediate coupling means for transmitting rotary torque in a universal angle position between the two coupling claws.

The coupling claws 21 and 22 preferably are identical and each comprises a supporting shaft hub which may be threaded or formed with splines or wedge coupling grooves or similar means and from which two claws or claw arms 23 extend.

The claw arms 23 are formed with an inner circular arc surface 24. The inner circular arc surface 24 is angled and extends over an angle which is larger than 90° for retaining the inner coupling means. The inner coupling means comprises four insert parts 25 having a bow-formed outer surface 26 and sides 27 which diverge radially inwards so that the sides 27 engage the angle sides 24a and 24b of the arm arc surface 24. Thanks to the above described angles the insert parts 25 are retained in the space between the two coupling claw arms 23.

For providing an automatical adjustment of possible wear each insert part is formed with an inner foot 28, as best evident from figures 4 and 5. The inner surface 29 of the inner foot 28 is slightly angled radially outwards with the apex 30 intermediate the foot 28 and the angle surface 29 extending in the longitudinal direction of the insert part. Between two cooperating insert parts there is an adjustment mechanism comprising two wedge parts 31 and an intermediate pressure spring 32 which is forcing the wedge parts 31 apart and thereby is forcing the cooperating insert part 25 radially outwards from each other. In case of wear the insert parts 25 therefore successively are being pressed radially outwards so as to constantly be in contact with the sides 24a and 24b of the claw arms 23.

In this connection it may be noted that an equivalent function may be obtained without the use of the above described wedge part and the intermediate pressure spring, viz. in such universal joints which are intended to rotate at relatively high speed. In such joints the intermediate parts alone may provide the automatical adjustment by the action of the centrifugal force. Possibly the insert parts in this case may be made of a more heavy material or having a heavy insert portion.

As obvious to the expert a further equivalent function may be obtained in that the wedge parts together with the intermediate spring is substituted by a resilient insert, for instance a body of natural rubber or synthetic rubber.

Preferably the coupling claws including the arms are made of a hard and wear resistant material, whereas the intermediate parts can be made of a less hard material like a suitable resin, for instance a self-lubricating synthetic resin. The force transmittance between the two coupling claws thereby is made by a damped non-metallic contact. Possible wear appears in the intermediate coupling parts made of the relatively cheap material, and thereby the universal joint may easily and non-expensively be re-conditioned. Depending on the special design the joint is broken up or collapses if the joint shafts are angled over a predetermined angle or if the joint is overloaded. This may be advantageous or even necessary if the universal joint is used as a coupling for a steering wheel tube or for a similar purpose.

For protecting the universal joint and preventing wear depending on external substances like dust, sand, gravel etc. entering the joint it may as usual be formed with protection cover provided over the joint and sealingly engaging the shaft hubs of the coupling claws.

It is to be understood that the above specification and the embodiments of the invention shown in the drawings are only illustrating examples and that all kinds of modifications may be presented within the scope of the appended claims.

**Claims**

1. Universal joint comprising two joint coupling claws (21, 22) adapted to transmit rotary torque, at a universal angle position, between the two coupling claws (21, 22) in which each of the two coupling claws is formed with a fork like claw arm (23), which claws (21, 22) are rotatable axially in relation to each other over an intermediate coupling means comprising at least four mutually cooperating insert parts (25), and in which the coupling claw arms (23) are arc formed and angle formed with the apex of the angle sides (24a, 24b) thereof facing radially inwards, and in which said claw arms (23) extend over an angle of more than 90° and cooperate with the four insert parts (25) provided between each respective pair of coupling claw arms (23), characterized in that the insert parts (25) are formed with a foot portion (28) having at least one radially inwards directed wedge coupling surface (29) cooperating with a spring biassed wedge joint means (31, 32) slidingly being in contact with the wedge coupling surface (29) of the insert parts (25) thereby biassing the insert parts (25) apart and into contact with angle sides (24a, 24b) of the coupling claw arms (23) so as to automatically eliminate any play appearing in the universal joint depending on wear.

2. Universal joint according to claim 1, characterized in that each insert part (25) is arc formed and has a head portion (26, 27) the sides of which converge in the direction radially outwards and engage the angle sides (24a, 24b) of the coupling claw arms (23).

3. Universal joint according to claim 1 or 2, characterized in that the spring biassed wedge joint means (31, 32) forcing the insert parts (25) radially outwards is in common for all four insert parts (25).

4. Universal joint according to any of claims 1—3, characterized in that all four insert parts (25) are identical, and as a consequence the universal joint is fully symmetrical.

5. Universal joint according to claim 1, characterized in that the innermost surface of the foot (28) of each insert part (25), as seen in the radial direction, is angled (at 29) with the angle apex at the axial centre of the foot (28) as seen in the longitudinal direction of the insert part (25), and in that the spring biassing wedge means comprises two wedge parts (31) and an intermediate pressure spring (32) provided centrally inside the universal joint and adapted to force the insert parts (25) radially outwards into contact with the angle sides (24a, 24b) by acting on the inner surfaces (29) of the intermediate foot (28).

**Patentansprüche**

1. Kreuzgelenk mit zwei Kupplungsklauen (21, 22) geeignet zur Drehmomentenübertragung in einer universellen Winkelposition zwischen den beiden Kupplungsklauen (21, 22), wobei die beiden Kupplungsklauen jeweils mit einem gabelförmigen Kupplungsarm (23) versehen und über ein Zwischenkupplungsmittel mit wenigstens vier gegenseitig zusammenwirkenden Einsatzstücken (25) axial in Relation zueinander drehbar sind, und wobei die Kupplungsklauenarme (23) bogenförmig und winklig mit einem radial nach innen weisenden Scheitel ihrer Winkelseiten (24a, 24b) ausgebildet sind und wobei sich genannte Klauenarme (23) über einen Winkel von mehr als 90° erstrecken und mit den vier, zwischen jedem entsprechenden Paar von Klauenarmen (23) vorgesehenen Einsatzstücken zusammenwirken, dadurch gekennzeichnet, daß an die Einsatzstücke (25) ein wenigstens eine radial einwärts gerichtete Keilkupplungsfläche (29) aufweisender Fußabschnitt (28) angeformt ist, der mit einem mit der Keilkupplungsfläche (29) der Einsatzstücke (25) in Gleitkontakt stehenden federbelasteten Keilverbindungsmittel (31, 32) zusammenwirkt, wodurch die Einsatzstücke (25) auseinander- und mit den Winkelseiten (24a, 24b) der Kupplungsklauenarme (23) in Kontakt gedrängt werden, so daß ein verschleißbedingtes Spiel im Kreuzgelenk automatisch eliminert wird.

2. Kreuzgelenk nach Anspruch 1, dadurch gekennzeichnet, daß jedes Einsatzstück (25) bogenförmig ausgebildet ist und einen Kopfabschnitt (26, 27) aufweist, dessen Seiten in Richtung radial auswärts konvergieren und an den Winkelseiten (24a, 24b) der Kupplungsklauenarme (23) anliegen.

3. Kreuzgelenk nach Anspruch 1 oder 2, dadurch gekennzeichnet, daß das federbelastete Keilverbindungsmittel (31, 32), welches die Einsatzstücke (25) radial nach außen drängt, allen vier Einsatzstücken (25) gemeinsam ist.

4. Kreuzgelenk nach einem der Ansprüche 1 bis 3, dadurch gekennzeichnet, daß alle vier Einsatzstücke (25) identisch ausgebildet sind und infolgedessen das Kreuzgelenk voll symmetrisch ist.

5. Kreuzgelenk nach Anspruch 1, dadurch gekennzeichnet, daß die innerste Fläche des Fußes (28) jedes Einsatzstücks (25), gesehen in Radialrichtung, winklig (bei 29) ausgebildet ist, wobei der Winkelscheitel am axialen Zentrum des Fußes (29), gesehen in der Längsrichtungs des Einsatzstücks (25), liegt, und daß das federbelastete Keilmittel zwei Keilteile (31) und eine dazwischenliegende Druckfeder (32) aufweist, die zentral im Kreuzgelenk angeordnet und geeignet sind, die Einsatzstücke (25) unter Einwirkung auf die Innenflächen des Fußes (28) radial auswärts in Kontakt mit den Winkelseiten (24a, 24b) zu drängen.

**Revendications**

1. Joint universel comprenant deux griffes (21, 22) d'accouplement du joint, destiné à transmettre un couple de rotation, quel que soit l'angle formé, entre les deux griffes d'accouplement, dans lequel chacune des deux griffes d'accouplement est munie d'une mâchoires (23) en forme de fourche, lesquelles griffes (21, 22) peuvent tourner axialement l'une avec l'autre par l'intermédiaire d'un dispositif d'accouplement intermédiaire comprenant au moins quatre inserts (25) coopérant mutuellement et dans lequel les mâchoires (23) des griffes d'accouplement sont en forme d'arc de cercle et angulaires, le sommet de l'angle formé par leurs flancs (24a, 24b) étant orienté radialement vers l'intérieur, et dans lequel lesdites mâchoires (23) des griffes s'étendent sur un angle supérieur à 90° et coopèrent avec les quatre inserts (25) disposés respectivement entre chaque paire de mâchoires (23) des griffes d'accouplement, caractérisé par le fait que les inserts (25) sont munis d'une semelle (28) comportant au moins un plan incliné (29) de coin dirigé radialement vers l'intérieur, coopérant avec un dispositif (31, 32) à coins, rappelé par un ressort qui est en contact de glissement avec le plan incliné (29) des inserts (25) et qui peut ainsi écarter les inserts (25) et les forcer entre les flancs angulaires (24a, 24b) des mâchoires (23) des griffes d'accouplement, de manière à éliminer automatiquement tout jeu dû à l'usure, apparaissant dans le joint universel.

2. Joint universel selon la revendication 1, caractérisé par le fait que chaque insert (25) est en forme d'arc et comporte une partie (26, 27) de tête dont les flancs convergent radialement vers l'extérieur et s'appliquent contre les flancs angulaires (24a, 24b) des mâchoires (23) des griffes d'accouplement.

3. Joint universel selon la revendication 1 ou 2, caractérisé par le fait que le dispositif (31, 32) à coins rappelé par ressort, qui écarte les inserts (25) radialement vers l'extérieur, est commun aux quatre inserts (25).

4. Joint universel selon l'une des revendications 1 à 3, caractérisé par le fait que les quatre inserts (25) sont identiques et que, par conséquent, le joint universel est totalement symétrique.

5. Joint universel selon la revendication 1, caractérisé par le fait que, si l'on prend en considération la direction radiale, la surface la plus interne de la semelle (28) de chaque insert (25) forme un angle (en 29) dont le sommet se situe axialement au milieu de la semelle (28), si l'on prend en considération la direction longitudinale de l'insert (25), et par le fait que le dispositif à coins rappelé par ressort comporte deux pièces (31) de coin et un ressort intercalé (32) de pression, disposé au centre du joint universel et destiné à écarter radialement vers l'extérieur les inserts (25) pour les forcer contre les flancs angulaires (24a, 24b) en agissant sur les surfaces intérieures (29) de la semelle intermédiaire (28).

**Fig. 1**

Ⅲ

23

23

24a

24b

Ⅲ

**Fig. 2**

23

24a

24b

25

26

27

23

31

32

**Fig. 3**

2

**Fig. 4**

**Fig. 5**